# EUROPÄISCHE PATENTSCHRIFT

(11) **EP 3 085 818 B1**
(45) Veröffentlichungstag und Bekanntmachung des Hinweises auf die Patenterteilung: **09.10.2019**
(21) Anmeldenummer: 16151274.4
(22) Anmeldetag: 14.01.2016
(51) Int. Cl.: D02G 3/48, B60C 9/00, B29D 30/30, B29D 30/72

(54) **VERFAHREN ZUR HERSTELLUNG VON FAHRZEUGREIFEN**
METHOD FOR MANUFACTURING VEHICLE TYRES
PROCÉDÉ DE FABRICATION DE PNEUS DE VEHICULE

(30) Priorität: 20.04.2015 DE 102015207131
(43) Veröffentlichungstag der Anmeldung: 26.10.2016
(73) Patentinhaber: Continental Reifen Deutschland GmbH, 30165 Hannover (DE)
(72) Erfinder: Ludwig, Reinhard, 31848 Bad Münder (DE); Reese, Wolfgang, 31228 Peine (DE); Bergmann, Sascha, 30179 Hannover (DE); Neumann, Marcel, 30161 Hannover (DE)
(74) Vertreter: Widjaja, Wira

(56) Entgegenhaltungen:
- EP-A1- 2 065 223
- EP-A2- 0 698 510
- DE-A1-102005 018 964
- DE-A1-102012 103 615
- GB-A- 2 003 525
- US-A1- 2014 069 563

## Beschreibung

Die Erfindung betrifft ein Verfahren zur Herstellung von Fahrzeugreifen.

Bei Fahrzeugreifen werden sogenannte Spulbandagen oberhalb des Reifengürtels eingesetzt. Die Spulbandage besteht aus einem Elastomermaterial, in dem Festigkeitsträger eingebettet sind. Sie wird bei der Herstellung von Reifenrohlingen über den Reifengürtel gespult. Die Spulbandage hat insb. die Aufgabe durch eine Versteifung des Reifens im sogenannten Crown-Bereich die Fahreigenschaften zu verbessern.

Ein Verfahren zur Herstellung eines Fahrzeugreifens, bei welchem eine Spulbandage mittels zweier Spulköpfe auf einen Reifengürtel aufgewickelt wird, ist beispielsweise aus der DE 10 012 103 615 A1 bekannt. Dabei beginnt der Spulprozess mit beiden Spulköpfen im mittleren Bereich des Reifengürtels und wird zu den Gürtelrändern unter kontinuierlicher Erhöhung der Vorspannung durchgeführt. Die DE 10 2005 018 964 A1 offenbart ein weiteres Verfahren zur Herstellung eines Fahrzeugreifens mit einem Spulprozess, bei welchem zur Bildung der Spulbandage Bandagestreifen mit einer Breite von 5 mm bis 15 mm mit mindestens vier Zuführvorrichtungen aufgespult werden. Aus der EP 2 065 223 A1 ist es bekannt, in Hochgeschwindigkeitsreifen in der Karkasseinlage und in der Bandagenlage des Gürtels als Festigkeitsträger einen Hybridkord aus Aramid und Nylon einzusetzen.

Der Erfindung lag die Aufgabe zugrunde, ein Verfahren bereitzustellen, mit dem eine verbesserte Reifenkonstruktion erreicht wird.
Insbesondere soll die Hochgeschwindigkeitstauglichkeit der Reifenkonstruktion verbessert werden.

Gelöst wird die Aufgabe durch ein Verfahren mit folgenden Schritten:
a) Herstellung eines Reifenrohlings mit einer Reifenkarkasse, Seitenwände, Reifenwülsten mit einer oder mehreren Reifenaufbautrommel(n),
b) Anordnen eines Reifengürtels koaxial zur Reifenkarkasse,
c) Aufbringen einer Spulbandage über der Gürtellage,
   wobei die Spulbandage eine Vielzahl von Festigkeitsträgern aus einem Aramid-Nylon-Hybrid umfasst,
   wobei die Festigkeitsträger jeweils zwei Fäden aus einem Aramid-Material und jeweils einen Faden aus einem Nylon-Material umfassen,
d) wobei der Spulprozess mit zwei Spulköpfen erfolgt,
   wobei eine schmale Spulbandage mit einer Streifenbreite zwischen 1 und 4 mm über der Gürtellage aufgespult wird,
e) wobei der Spulprozess mit jedem Spulkopf jeweils von dem mittleren Bereich des Reifengürtels beginnt und über einen Aufspulvorgang die Spulbandage bis zu den Rändern des Reifengürtels geführt wird,
f) wobei beim Spulprozess eine Variation in der Vorspannung in einem Bereich zwischen mindestens 5 N und maximal 100 N der aufzuspulenden Spulbandage erfolgt,
   wobei der Fahrzeugreifen durch den Aufspulvorgang eine für Hochgeschwindigkeitstreifen optimierte Reifenkontur erhält,
g) Anordnen des Laufstreifens über die Spulbandage,
h) Fertigstellung des Fahrzeugreifens mit weiteren Schritten.

Ein Vorteil der Erfindung ist insbesondere darin zu sehen, dass durch das erfindungsgemäße Verfahren die Hochgeschwindigkeits-Eigenschaften des Reifens und das Handling der Fahrzeugreifen wesentlich verbessert werden. Durch die gemäß dem Hauptanspruch aufgebrachte Spulbandage können sich die Reifenkontur und die Bodenaufstandsfläche den Fahrzuständen optimal anpassen.
Die verbesserte Reifenkontur wird insbesondere dadurch erzeugt, dass der Fahrzeugreifen eine signifikant höhere Struktursteifigkeit besitzt. Diese höhere Struktursteifigkeit wird insb. durch die Spulbandage mit den Festigkeitsträgern aus dem Aramid-Nylon-Hybrid-Material erzeugt.
Mit Nylon-Material ist ein Polyamid-Material mit der Kurzbezeichnung PA 6.6 gemeint. Durch diese Materialauswahl wird insbesondere eine höhere Seitenkraft-Steifigkeit bei Fahrzeugreifen erreicht, die insbesondere für einen Hochgeschwindigkeitseinsatz vorgesehen sind. Durch die schmale Streifenbreite beim Spulbandagen-Material wird außerdem erreicht, dass bei einer Zweikopf-Spulung die Überlappungsbereiche insbesondere im Zenit des Reifens weitestgehend vermieden werden.
Außerdem wird im Bereich der Gürtelkanten eine Materialanhäufung im Bereich des sogenannten "run stops" vermieden. Durch den besonderen Herstellungsprozess und die besondere Materialauswahl bei den Festigkeitsträgern wird die Hochgeschwindigkeitsfestigkeit deutlich verbessert. Außerdem erhält man im Ergebnis eine optimierte Reifenkontur, weil die Bandagenfestigkeit über der Reifenbreite keine Modulsprünge aufweist.

In einer vorteilhaften Weiterbildung der Erfindung ist vorgesehen, dass der Aramidfaden des Festigkeitsträgers eine Feinheit von ca. 1680 dtex und der Nylonfaden des Festigkeitsträgers eine Feinheit von ca. 470 dtex aufweist.
Bei diesen Längengewichten besitzen die Festigkeitsträger optimale Festigkeitswerte, um eine hohe Seitenkraftsteifigkeit beim Fahrzeugreifen zu erreichen.

In einer weiteren vorteilhaften Weiterbildung der Erfindung ist vorgesehen, dass die schmale Spulbandage im Querschnitt 1 bis 8 Festigkeitsträger aufweist.
Dadurch lässt sich trotz der schmalen Spulbandage noch eine hohe Spulgeschwindigkeit erreichen.

In einer weiteren vorteilhaften Weiterbildung der Erfindung ist vorgesehen, dass bei Schritt f) der Spulprozess im mittleren Bereich des Gürtels mit einer Vorspannung von ca. 15 N erfolgt,
wobei die auf die Spulbandage einwirkende Vorspannung bis zur Außenschulter hin auf eine Vorspannung von ca. 75 N erhöht wird.

Dadurch lässt sich eine optimierte Reifenkontur für den Fahrzeugreifen erzeugen.

In einer weiteren vorteilhaften Weiterbildung der Erfindung ist vorgesehen, dass bei Schritt e) die Spulbandage im Wesentlichen einlagig über die gesamte Gürtelbreite aufgespult wird.
Dadurch wird die Zugriffszeit zum Aufbringen der Spulbandage gering gehalten.

In einer weiteren vorteilhaften Weiterbildung der Erfindung ist vorgesehen, dass die Reduzierung oder das Erhöhen der auf die Spulbandage einwirkenden Vorspannung kontinuierlich erfolgt.
Dadurch ergeben sich keine Sprünge im Hinblick auf die Struktursteifigkeit des Fahrzeugreifens.

Anhand eines Ausführungsbeispiels soll die Erfindung näher erläutert werden. Es zeigt:
- Fig. 1:: ein Ausführungsbeispiel des erfindungsgemäßen Verfahrens
- Fig. 2:: eine Abwicklung des Spulbildes.

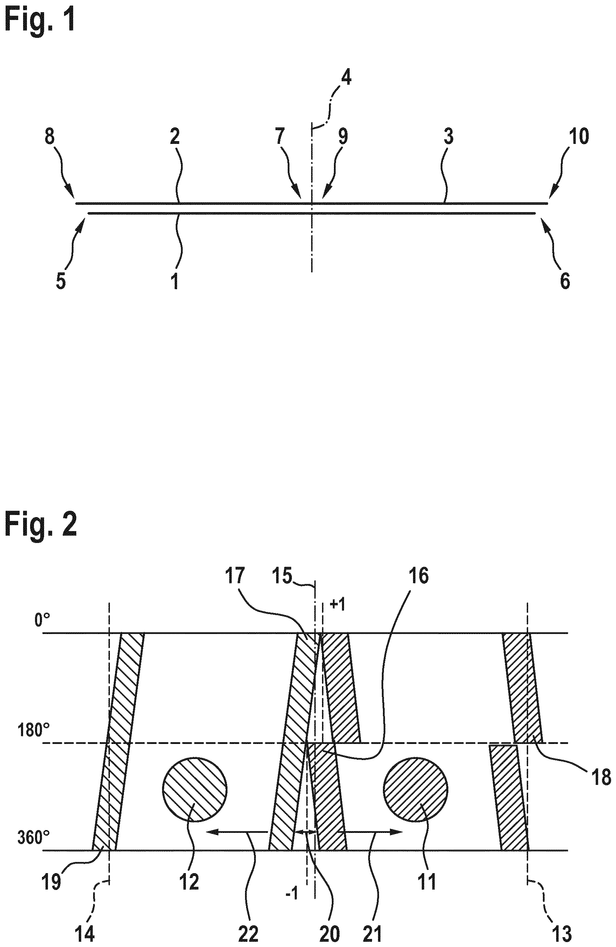

Die Figur 1 zeigt ein Ausführungsbeispiel des Verfahrens.

Der Reifengürtel 1 ist schematisch als durchgehender Strich dargestellt. Die Spulbandage 2 und 3 wird über die gesamte Gürtelbreite des Reifengürtels 1 auf den Reifenrohling aufgespult. Der Gürtel 1 und die beiden Spulbandagen 2 und 3 sind in einer Radialschnittansicht dargestellt, wobei sich auf der linken Seite die Außenschulter 5 und auf der rechten Seite die Innenschulter 6 befindet. Die axiale Reifenmitte befindet sich im mittleren Bereich, von wo aus der Spulprozess jeweils beginnt. Der linke Spulkopf wird am Startpunkt 7 angesetzt, wobei in diesem Bereich eine Vorspannung von ca. 5 bis 15 N (Newton) auf die Spulbandage aufgebracht wird. Anschließend bewegt sich der linke Spulkopf nach links zur Außenschulter des Reifenrohlings, wobei kontinuierlich die Vorspannung bis auf den Wert von 75 bis 100 N erhöht wird. Der rechte Spulkopf wird ebenfalls an der axialen Reifenmitte am Startpunkt 9 angesetzt, wobei eine Vorspannung von ca. 5 bis 15 N aufgebracht wird. Anschließend bewegt sich der rechte Spulkopf nach rechts zur Innenschulter 6 hin. Bei diesem Spulprozess wird die Vorspannung kontinuierlich bis auf den Wert von 75 bis 100N am Endpunkt 10 erhöht.

Der Gürtel 1 liegt beim Aufspulvorgang der Spulbandage auf einer nicht dargestellten zylindrischen Gürteltrommel an. Die Festigkeitsträger in der Spulbandage bestehen aus einem Aramid-Nylon-Hybrid-Material.

Mit Nylon-Material ist ein Polyamid-Material mit der Kurzbezeichnung PA 6.6 gemeint. Durch die schmale Spulbandage, die zwischen 1 und 4 mm breit ist, können Überlappungsbereiche insbesondere in der axialen Reifenmitte 4 vermieden werden. Dadurch besitzt der Fahrzeugreifen eine optimierte Reifenkontur, weil die Bandagenfestigkeit über der Reifenbreite keine Modulsprünge aufweist. Durch das besondere Herstellungsverfahren werden außerdem die Eigenschaften für den Tire-Uniformity-Wert verbessert.

Die Figur 2 zeigt eine Abwicklung des Spulbildes. Es zeigt eine Aufsicht auf das Spulbild mit der unten liegenden ersten Gürtellage, wobei die linke Gürtelkante 13 und die rechte Gürtelkante 14 jeweils als gestrichelte Linien dargestellt sind.

Der linke Spulkopf 11 und der rechte Spulkopf 12 setzen jeweils an der Startposition 16 für die linke Spulbandage und der Startposition 17 für die rechte Spulbandage an, wobei beide Startpositionen um ca. 180° versetzt angeordnet sind.

Die Pfeile 21 und 22 zeigen die Bewegungsrichtungen der beiden Spulköpfe von der Mitte zu den Außenkanten des Gürtels. Die Spulbandagen werden jeweils in einem leicht angeschrägten Winkel aufgespult.

In der Mitte ergibt sich eine kleine Lücke 20 in der Spulbandagenabdeckung, die aufgrund der schmalen Spulbandagenbreite gering gehalten wird.

### Bezugszeichenliste

### (ist Teil der Beschreibung)

- 1: Reifengürtel
- 2: linke Spulbandage (der Außenschulter zugeordnet)
- 3: rechte Spulbandage (der Innenschulter zugeordnet)
- 4: axiale Reifenmitte
- 5: Außenschulter
- 6: Innenschulter
- 7: Startpunkt des linken Spulkopfes
- 8: Endpunkt des linken Spulkopfes
- 9: Startpunkt des rechten Spulkopfes
- 10: Endpunkt des rechten Spulkopfes
- 11: linker Spulkopf
- 12: rechter Spulkopf
- 13: linke Gürtelkante
- 14: rechte Gürtelkante
- 15: Mittellinie bzw. Zenit der Gürtellage
- 16: Startposition des ersten Spulkopfes für die linke Spulbandage
- 17: Startposition des zweiten Spulkopfes für die rechte Spulbandage
- 18: Ende der linken Spulbandage
- 19: Ende der rechten Spulbandage
- 20: Lücke in der Spulbandagenabdeckung
- 21: Bewegungsrichtung des linken Spulkopfes
- 22: Bewegungsrichtung des rechten Spulkopfes

## Patentansprüche

1. Verfahren zur Herstellung von PKW- Hochgeschwindigkeitsreifen mit folgenden Schritten:
a) Herstellung eines Reifenrohlings mit einer Reifenkarkasse, Seitenwände, Reifenwülsten mit einer oder mehreren Reifenaufbautrommel(n),
b) Anordnen eines Reifengürtels (1) koaxial zur Reifenkarkasse,
c) Aufbringen einer Spulbandage (2,3) über der Gürtellage (1),
wobei die Spulbandage (2,3) eine Vielzahl von Festigkeitsträgern aus einem Aramid-Nylon-Hybrid umfasst,
wobei die Festigkeitsträger jeweils zwei Fäden aus einem Aramid-Material und jeweils einen Faden aus einem Nylon-Material umfassen,
d) wobei der Spulprozess mit zwei Spulköpfen erfolgt,
wobei eine schmale Spulbandage (2,3) mit einer Streifenbreite zwischen 1 und 4 mm über der Gürtellage (1) aufgespult wird,
e) wobei der Spulprozess mit jedem Spulkopf jeweils von dem mittleren Bereich (4) des Reifengürtels (1) beginnt und über einen Aufspulvorgang die Spulbandage (2,3) bis zu den Rändern des Reifengürtels (1) geführt wird,
f) wobei beim Spulprozess eine Variation in der Vorspannung in einem Bereich zwischen mindestens 5 N und maximal 100 N der aufzuspulenden Spulbandage (2, 3) erfolgt,
wobei der Fahrzeugreifen durch den Aufspulvorgang eine für Hochgeschwindigkeitstreifen optimierte Reifenkontur erhält,
g) Anordnen des Laufstreifens über die Spulbandage (2,3),
h) Fertigstellung des Fahrzeugreifens mit weiteren Schritten.

2. Verfahren nach Anspruch 1,
**dadurch gekennzeichnet, dass**
der Aramidfaden des Festigkeitsträgers eine Feinheit von 1680 dtex und der Nylonfaden des Festigkeitsträgers ein Längengewicht von 470 dtex aufweist.

3. Verfahren nach einem der vorhergehenden Ansprüche,
**dadurch gekennzeichnet, dass**
die schmale Spulbandage (2,3) im Querschnitt 1 bis 8 Festigkeitsträger aufweist.

4. Verfahren nach einem der vorhergehenden Ansprüche,
**dadurch gekennzeichnet, dass**
bei Schritt f) der Spulprozess im mittleren Bereich (4) des Gürtel (1) mit eine Vorspannung von 5 bis 15 N erfolgt,
wobei die auf die Spulbandage (2,3) einwirkende Vorspannung bis zur Außenschulter (5) und zur Innenschulter (6) hin auf eine Vorspannung von 75 bis 100 N erhöht wird.

5. Verfahren nach einem der vorhergehenden Ansprüche,
**dadurch gekennzeichnet, dass**
das Erhöhen der auf die Spulbandage (2, 3) einwirkenden Vorspannung kontinuierlich erfolgt.

6. Verfahren nach einem der vorhergehenden Ansprüche,
**dadurch gekennzeichnet, dass**
bei Schritt e) die Spulbandage im Wesentlichen einlagig über die gesamte Gürtelbreite aufgespult wird.

## Claims

1. Method for manufacturing high-speed passenger-car tyres by the following steps:
a) manufacturing a tyre blank comprising a tyre carcass, sidewalls and tyre beads with one or more tyre building drum(s),
b) arranging a tyre belt (1) coaxially in relation to the tyre carcass,
c) applying a wound bandage (2, 3) over the belt ply (1),
the wound bandage (2, 3) comprising a multiplicity of reinforcing elements of an aramid-nylon hybrid, the reinforcing elements comprising in each case two yarns of an aramid material and in each case one yarn of a nylon material,
d) the winding process being performed by two winding heads,
a narrow wound bandage (2, 3) with a strip width of between 1 and 4 mm being wound on over the belt ply (1),
e) the winding process with each winding head beginning in each case from the middle region (4) of the tyre belt (1) and the wound bandage (2, 3) being taken up to the edges of the tyre belt (1) by means of a winding-on operation,
f) a variation in the pretensioning in a range between at least 5 N and at most 100 N of the wound bandage (2, 3) to be wound on taking place during the winding process,
the winding-on operation providing the vehicle tyre with a tyre contour that is optimized for high-speed tyres,
g) arranging the tread over the wound bandage (2, 3),
h) completing the vehicle tyre by further steps.

2. Method according to Claim 1,
**characterized in that**
the aramid yarn of the reinforcing element has a fineness of 1680 dtex and the nylon yarn of the reinforcing element has a weight per unit length of 470 dtex.

3. Method according to one of the preceding claims,
**characterized in that**
the narrow wound bandage (2, 3) has in cross section 1 to 8 reinforcing elements.

4. Method according to one of the preceding claims,
**characterized in that**
in step f), the winding process is performed in the middle region (4) of the belt (1) with a pretensioning of 5 to 15 N,
the pretensioning that acts on the wound bandage (2, 3) being increased towards the outer shoulder (5) and towards the inner shoulder (6) to a pretensioning of 75 to 100 N.

5. Method according to one of the preceding claims,
**characterized in that**
the increase in the pretensioning that acts on the wound bandage (2, 3) takes place continuously.

6. Method according to one of the preceding claims,
**characterized in that**
in step e), the wound bandage is wound up substantially as a single ply over the entire width of the belt.

## Revendications

1. Procédé de fabrication de pneus haute vitesse pour des voitures, comprenant les étapes suivantes:
a) fabrication d'une ébauche de pneu avec une carcasse de pneu, des flancs, des talons de pneu avec un ou plusieurs tambour(s) de construction de pneu,
b) agencement d'une ceinture de pneu (1) coaxialement à la carcasse de pneu,
c) pose d'un bandage d'enroulement (2, 3) au-dessus de la couche de ceinture (1),
dans lequel le bandage d'enroulement (2, 3) comprend une multiplicité d'éléments de résistance en un hybride aramide-nylon,
dans lequel les éléments de résistance comprennent chacun deux fils en un matériau d'aramide et chacun un fil en un matériau de nylon,
d) dans lequel on exécute le processus d'enroulement avec deux têtes d'enroulement,
dans lequel on enroule un bandage d'enroulement étroit (2, 3) avec une largeur de bande comprise entre 1 et 4 mm au-dessus de la couche de ceinture (1),
e) dans lequel le processus d'enroulement avec chaque tête d'enroulement commence respectivement à partir de la région centrale (4) de la ceinture de pneu (1) et le bandage d'enroulement (2, 3) est mené par une opération d'enroulement jusqu'aux bords de la ceinture de pneu (1),
f) dans lequel on opère lors du processus d'enroulement une variation de la précontrainte dans une plage comprise entre au moins 5 N et au maximum 100 N du bandage d'enroulement à enrouler (2, 3),
dans lequel le pneu de véhicule reçoit par l'opération d'enroulement un contour de pneu optimisé pour des pneus haute vitesse,
g) agencement de la bande de roulement au-dessus du bandage d'enroulement (2, 3),
h) achèvement du pneu de véhicule avec d'autres étapes.

2. Procédé selon la revendication 1, **caractérisé en ce que** le fil d'aramide de l'élément de résistance présente une finesse de 1680 dtex et le fil de nylon de l'élément de résistance présente un poids longitudinal de 470 dtex.

3. Procédé selon l'une quelconque des revendications précédentes, **caractérisé en ce que** le bandage d'enroulement étroit (2, 3) présente dans la section transversale 1 à 8 éléments de résistance.

4. Procédé selon l'une quelconque des revendications précédentes, **caractérisé en ce qu'**à l'étape f) on exécute le processus d'enroulement dans la région centrale (4) de la ceinture (1) avec une précontrainte de 5 à 15 N, dans lequel on augmente la précontrainte agissant sur le bandage d'enroulement (2, 3) à une précontrainte de 75 à 100 N jusqu'à l'épaulement extérieur (5) et l'épaulement intérieur (6).

5. Procédé selon l'une quelconque des revendications précédentes, **caractérisé en ce que** l'on opère de façon continue l'augmentation de la précontrainte agissant sur le bandage d'enroulement (2, 3).

6. Procédé selon l'une quelconque des revendications précédentes, **caractérisé en ce qu'**à l'étape e) on enroule le bandage d'enroulement essentiellement en une seule couche sur toute la largeur de la ceinture.
